# EUROPEAN PATENT APPLICATION

(11) **EP 2 842 913 A1**
(43) Date of publication of application: **04.03.2015**
(21) Application number: 12875689.7
(22) Date of filing: 26.04.2012
(51) Int. Cl.: C01B 39/06, C01B 33/32

(54) **NOVEL COPPER SILICATE MOLECULAR SIEVE, AND METHOD FOR PRODUCING SAME**

(71) Applicant: ZeoEn Co., Ltd., Seoul 140-735 (KR)
(72) Inventor: YOON, Kyung Byung, Seoul 110-847 (KR); DATTA, Shuvo Jit, Seoul 121-854 (KR)
(74) Representative: Isarpatent
(86) International application number: PCT/KR2012/003248
(87) International publication number: WO 2013/162103

(57) **Abstract**

The present disclosure relates to a novel copper silicate molecular sieve, and a novel method for producing the molecular sieve, which is capable of synthesizing the copper silicate molecular sieve with a high yield.

## Description

### TECHNICAL FIELD

The embodiments described herein pertain generally to a novel copper silicate molecular sieve, and a method for producing the molecular sieve, which is capable of synthesizing the copper silicate molecular sieve with a high yield rate.

### BACKGROUND ART

Since one-dimensional (1D) semiconductor quantum-confined materials are highly likely to be utilized for a building block of a nano-scale electronic device and other novel uses, syntheses and characterizations of such materials are important. Among known 1D semiconductor materials, molecular wires or quantum wires are the thinnest 1D quantum-confined material, but there are rare examples for such quantum wires. Recently, the inventors of the present disclosure have investigated an interesting quantum confinement characteristic of titanate (=TiO₃²⁻) quantum wires regularly arranged within a titanosilicate molecular sieve called ETS-10, and the titanate (TiO₃²⁻) quantum wires exhibit a length-dependent quantum confinement effect even in a length scale of 50 nm or longer. Although it is expected that silicate molecular sieves of various transition metals other than Ti, which have the ETS-10 structure, will highly likely be utilized for a building block of a nano-scale electronic device and other novel uses, such silicate molecular sieves of various transition metals and synthesizing methods thereof have not yet been known. Thus, development of novel metal silicate molecular sieves including other transition metals other than Ti, which have the ETS-10 structure, and a producing method, which is capable of easily synthesizing the novel metal silicate molecular sieves with a high yield have been demanded in the field of nano and nano-pore material science as well as catalysts.

### DISCLOSURE OF THE INVENTION

### PROBLEMS TO BE SOLVED BY THE INVENTION

Embodiments of the present disclosure provide a novel copper silicate molecular sieve, and a novel producing method, which is capable of producing the novel copper silicate molecular sieve with a relatively high yield without using an oxidizing agent.

However, the problems sought to be solved by the present disclosure are not limited to the above-described problems, and other problems can be clearly understood by those skilled in the art from the following description.

### MEANS FOR SOLVING THE PROBLEMS

In accordance with one aspect of an example embodiment of the present disclosure, there is provided a method for producing a copper silicate molecular sieve, including hydrothermally reacting a reaction mixture containing a silica source, a copper source, an alkali metal source, a base and water to form a copper silicate molecular sieve, wherein the reaction mixture includes no oxidizing agent.

### EFFECT OF THE INVENTION

In accordance with the example embodiments, a copper silicate molecular sieve can be synthesized without using an oxidizing agent with a higher yield than a conventional method. Further, in case of synthesizing the copper silicate molecular sieve by using a seed, a copper silicate molecular sieve having hollows can be synthesized. Such a copper silicate molecular sieve can be applied to fields of electronic devices, nano-devices, catalysts, nano materials, nano-pore materials and others.

### BRIEF DESCRIPTION OF THE DRAWINGS

**FIG. 1** shows SEM images measured for a crystal of a copper silicate molecular sieve SCuS-10 having hollows, which is a novel copper silicate molecular sieve synthesized by using CuSO₄·5H₂O as a copper source, in accordance with an example embodiment.
**FIG. 2** shows SEM images measured for a crystal of a copper silicate molecular sieve SCuS-10 having hollows, which is a novel copper silicate molecular sieve synthesized by using copper acetate as a copper source, in accordance with an example embodiment.
**FIG. 3** shows an SEM image measured for a novel copper silicate molecular sieve SCuS-10 crystal having no hollow, which is synthesized by using CuSO₄·5H₂O as a copper source under the presence of glucose as a reducing agent, in accordance with an example embodiment.
**FIG. 4** shows powder X-ray diffraction patterns of ETS-10, SCuS-10 (hollow) and SCuS-10 samples of example embodiments.
**FIG. 5** shows SEM images of a CuSH-1 crystal (comparative example) synthesized by using CuSO₄·5H₂O as a copper source.
**FIG. 6** shows a powder X-ray diffraction spectrum of a CuSH-1 crystal (comparative example) synthesized by using CuSO₄·5H₂O as a copper source.

### BEST MODE FOR CARRYING OUT THE INVENTION

Hereinafter, example embodiments and Examples of the present disclosure will be described in detail so that inventive concept may be readily implemented by those skilled in the art.

However, it is to be noted that the present disclosure is not limited to the example embodiments and the Examples, but can be realized in various other ways.

Throughout the whole document, the term "comprises or includes" and/or "comprising or including" used in the document means that one or more other components, steps, operations, and/or the existence or addition of elements are not excluded in addition to the described components, steps, operations and/or elements. Throughout the whole document, the terms "about" or "substantially" are intended to have meanings close to numerical values or ranges specified with an allowable error and intended to prevent accurate or absolute numerical values disclosed for understanding of the present invention from being illegally or unfairly used by any unconscionable third party. Throughout the whole document, the term "step of" does not mean "step for."

Throughout the whole document, the term "alkyl" used alone or as part of another group includes a linear or branched radical having 1 to about 22 carbon atoms, 1 to about 20 carbon atoms, 1 to about 10 carbon atoms, or 1 to about 6 carbon atoms, when it is used together with other terms such as "alkoxy," "arylalkyl," "haloalkyl" and "alkylamino," unless otherwise defined herein. The 1 to about 20 carbon atoms, the 1 to about 10 carbon atoms, or the alkyl group may be substituted with other substituents at a certain carbon position. For example, the alkyl group may include methyl, ethyl, propyl, isopropyl, n-butyl, t-butyl, isobutyl, pentyl, hexyl, isohexyl, heptyl, 4,4-dimethylpentyl, octyl, 2,2,4-trimethylpentyl, nonyl, decyl, undecyl, dodecyl, and isomers thereof, but is not limited thereto.

Throughout the whole document, the term "alkenyl" used alone or as part of another group means a linear- or branched-chain or cyclic hydrocarbon radical having 2 to 12 carbon atoms, 2 to about 20 carbon atoms, 2 to about 10 carbon atoms, or 2 to about 6 carbon atoms, and containing at least one carbon-to-carbon double bond. The alkenyl group may be substituted at a certain available adhesion point. Examples for the alkenyl radical include ethenyl, propenyl, allyl, propenyl, butenyl, 4-methylbutenyl, pentenyl, hexenyl, isohexenyl, heptenyl, 4,4-dimethylpentenyl, octenyl, 2,2,4-trimethylpentenyl, nonenyl, decenyl and isomers thereof, but are not limited thereto. The terms "alkenyl" and "lower alkenyl" include radicals having "cis" and "trans" orientation, or alternatively, "E" and "Z" orientation.

Throughout the whole document, the term "alkynyl" used alone or as part of another group means a linear- or branched-chain or cyclic hydrocarbon radical having 2 to 12 carbon atoms, 2 to about 20 carbon atoms, 2 to about 10 carbon atoms, or 2 to about 6 carbon atoms, and containing at least one carbon-to-carbon triple bond. The alkynyl group may be substituted at a certain available adhesion point. Examples for the radical may include ethynyl, propynyl, butynyl, 4-methylbutynyl, pentynyl, hexynyl, isohexynyl, heptynyl, 4,4-dimethylpentynyl, octynyl, 2,2,4-trimethylpentynyl, nonynyl, decynyl and isomers thereof, but are not limited thereto. In addition, the alkynyl group may be substituted at a certain available adhesion point. Representative substituents for the alkynyl group may include those enumerated above for the alkyl group, e.g., amino and alkylamino.

Throughout the whole document, the term "alkoxy" or "alkylthio" used alone or as part of another group means the alkyl group bonded through oxygen connection (-O-) or sulfur connection (-S-) as described above.

Throughout the whole document, the term "arylalkyl (aralkyl or aralkyl)" used alone or as part of another group includes an aromatic ring bonded through the alkyl group as described above, i.e., an aryl-substituted alkyl radical. A preferable arylalkyl radical is an arylalkyl radical, in which an aryl radical is adhered to an alkyl radial having 1 to 6 carbon atoms. Examples for the radical may include benzyl, biphenylmethyl, naphthyl, phenylethyl and others, but are not limited thereto.

Throughout the whole document, the term "aryl" used alone or as part of another group includes a monocyclic or non-cyclic aromatic ring, e.g., phenyl and substituted phenyl, and furthermore, a conjugated group, e.g., naphthyl, phenanthrenyl, indenyl, tetrahydronaphthyl and indanyl. Accordingly, the aryl group may contain one or more ring having six (6) or more atoms, there may be five (5) or less rings containing twenty-two (22) or less atoms, and double bond may be alternatively (resonance) present between neighboring carbon atoms or appropriate heteroatoms. The aryl group may be substituted with at least one group, which includes halogen, e.g., F, Br, Cl or I, alkyl, e.g., methyl, ethyl or propyl, and alkoxy, e.g., methoxy, ethoxy, hydroxyl, carboxy, carbamoyl, alkyloxycarbonyl, nitro, alkenyloxy, trifluoromethyl, amino, cycloalkyl, aryl, heteroaryl, cyano, alkyl S(O)m (m=O, 1, 2) or thiol, but is not limited thereto. A preferable aryl is an optionally substituted phenyl.

Throughout the whole document, the term "amino" used alone or as part of another group means -NH₂. "Amino" may be substituted by one (1) substituent or two (2) identical or different substituents, e.g., alkyl, aryl, arylalkyl, alkenyl, alkynyl, heteroaryl, heteroarylalkyl, cycloheteroalkyl, cycloheteroalkylalkyl, cycloalkyl, cycloalkylalkyl, haloalkyl, hydroxyalkyl, alkoxyalkyl, thioalkyl, carbonyl or carboxyl. Such substituents may be further substituted with carboxylic acid, any alkyl or aryl substituent described in this document. In some of example embodiments, the amino group is substituted with carboxyl or carbonyl to form a N-acyl or N-carbamoyl derivative.

Throughout the whole document, the term "cycloalkyl" used alone or as part of another group means a completely saturated or partially unsaturated hydrocarbon ring of 3 to 20 carbon atoms, 3 to 9 carbon atoms, or 3 to 7 carbon atoms. In addition, cycloalkyl may be substituted. Substituted cycloalkyl means a ring having one (1) substituent or two (2) or three (3) substituents selected from the group consisting of halo, alkyl, substituted alkyl, alkenyl, alkynyl, nitro, cyano, oxo (=O), hydroxyl, alkoxy, thioalkyl, -CO₂H, -C(=O)H, CO₂-alkyl, -C(=O)alkyl, keto, =N-OH, =N-O-alkyl, aryl, heteroaryl, heterocyclo, 5- or 6-membered ketal (i.e., 1,3-dioxolane or 1,3-dioxane), -NR'R", -C(=O)NR'R", -CO₂NR'R", -C(=O)NR'R", - NR'CO₂R", -NR'C(=O)R", -SO₂NR'R" and -NR'SO₂R" (wherein each of R' and R" is independently selected from hydrogen, alkyl, substituted alkyl, and cycloalkyl, or R' and R" form a heterocyclo or heteroaryl ring together).

Throughout the whole document, the term "halogen" or "halo" means chlorine, brome, fluorine or iodine which is independently selected.

Throughout the whole document, the term "cycloalkenyl" includes a carbocyclic group having at least one carbon-carbon double bond. The cycloalkenyl group includes a C₃∼C₂₀ ring, a C₃∼C₉ ring or a C₃∼C₆ ring. For example, the cycloalkenyl group may include cycloprophenyl, cyclobutenyl, cyclopentenyl, cyclopentadienyl, cyclohexenyl, cycloheptenyl, cycloheptadienyl and others, but is not limited thereto.

Throughout the whole document, the term "cycloalkynyl" includes a carbocyclic group having at least one carbon-carbon triple bond. The cycloalkenyl group includes a C₃∼C₂₀ ring, a C₃∼C₉ ring, or a C₃∼C₆ ring. For example, the cycloalkenyl group may include cyclopropynyl, cyclobutynyl, cyclopentynyl, cyclohexynyl, cycloheptynyl and others, but is not limited thereto.

Throughout the whole document, the term "alkali metal" means Na, K, Rb, Cs, Fr and others, and the term "alkali earth metal" means Be, Mg, Ca, Sr, Ba, Ra and others.

Hereinafter, the novel copper silicate molecular sieve and the novel method for producing the same in accordance with the present disclosure will be described in detail with reference to example embodiments, Examples and the drawings. However, the present disclosure is not limited to the example embodiments, the Examples and the drawings.

In accordance with one aspect of an example embodiment, there is provided a method for producing a copper silicate molecular sieve, which includes hydrothermally reacting a reaction mixture containing a silica source, a copper source, an alkali metal source, a base and water to form a copper silicate molecular sieve, wherein the reaction mixture includes no oxidizing agent.

According to the method for producing a copper silicate molecular sieve, a pure copper silicate can be easily produced with a high yield. Specifically, in the method for producing a copper silicate molecular sieve, the copper silicate molecular sieve can be easily synthesized with a high yield by a composition and pH of the reaction mixture, addition of an aging process, addition of a reducing agent, or others without using an oxidizing agent.

In forming the reaction mixture containing the silica source, the copper source, the alkali metal source, the base and water, each of the components may be mixed with one another at the same time or in a sequential manner, and the forming of the reaction mixture may be optionally carried out in the heated, cooled, reflux, and/or vacuum state, but the present disclosure is not limited thereto.

In an example embodiment, a molar ratio of SiO₂ derived from the silica source: CuO derived from the copper source: the base: the alkali metal source: water (H₂O) in the reaction mixture is 1 to 10: 1 to 10: 1 to 20: 1 to 20: 30 to 700, but is not limited thereto.

In an example embodiment, pH of the reaction mixture may be from 8 to 12, but is not limited thereto.

In an example embodiment, a temperature of the hydrothermal reaction may be from 100°C to 300°C, but is not limited thereto.

In an example embodiment, the reaction mixture may further include a seed crystal, but is not limited thereto.

In an example embodiment, the copper silicate molecular sieve may have ETS-10 structure, but is not limited thereto.

In an example embodiment, the reaction mixture may further include a reducing agent, but is not limited thereto. In this case, a molar ratio of SiO₂ derived from the silica source: CuO derived from the copper source: the reducing agent: the base: the alkali metal source: water (H₂O) in the reaction mixture is 1 to 10: 1 to 10: 1 to 20: 1 to 20: 1 to 20: 30 to 700, but is not limited thereto.

In an example embodiment, the reducing agent may include an organic reducing agent, an inorganic reducing agent, or combinations thereof, but is not limited thereto.

In an example embodiment, the organic reducing agent may include one or more organic reducing agents having a functional group selected from the group consisting of a carboxyl group, hydroxyl group, an aldehyde group, an amine group, sulfite group, bisulfite group, a carbonate group, a bicarbonate group, an phosphorous acid group, a hypophosphorous acid group, thiol group, cyano group, thiocyano group, an ammonium group, a hydrazinyl group, a borohydride group, an amide group, a silane group, an amino group, a carbamoyl group, an urea group and combinations thereof, but is not limited thereto.

In an example embodiment, the organic reducing agent may include a member selected from the group consisting of a carboxylic acid having 1 to 20 carbons and derivatives thereof, a dicarboxylic acid having 1 to 20 carbons and derivatives thereof, a polycarboxylic acid having 1 to 20 carbons and derivatives thereof, an amino acid having 1 to 20 carbons and derivatives thereof, a monovalent or multivalent alcohol having 1 to 20 carbons, an aldehyde-based compound having 1 to 20 carbons and derivatives thereof, a carbamoylic acid having 1 to 20 carbons and derivatives thereof, an amino acid and derivatives thereof, a boronic acid, a borane-based compound, a hydrazine-based compound, a silane-based compound, a hydroxylactone-based compound, a hydroquinone-based compound, an organic acid ammonium salt, a carbonate-based compound, an amide-based compound, an amine-based compound, a hydroxylamine-based compound, ammonia and ammonia precursor materials, urea and urea precursor materials, an urea hydrolysis product, and combinations thereof, but is not limited thereto.

For example, the organic reducing agent may include, but is not limited to, a carbohydrate compound like glucose, or a compound represented by the following Chemical Formula 1 or 2:

[Chemical Formula 1] R-COH

[Chemical Formula 2] R'-COOH

In each of Chemical Formulas 1 and 2 above, each of R and R' is independently hydrogen, or a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl group or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group, which may have at least one substituent selected from Group A below:

### [Group A]

A substituent group consisting of a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group.

For example, the organic reducing agent may include, but is not limited to, a member represented by the following Chemical Formula 3:

[Chemical Formula 3] R"-OH

In the chemical formula above, R" is a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group, which may have at least one substituent selected from Group B below:

### [Group B]

A substituent group consisting of a linear or branched alkyl group having 1 to 20 carbons, a linear or branched alkenyl group having 1 to 20 carbons, a cycloalkenyl group having 3 to 20 carbons, a cycloalkynyl group having 3 to 20 carbons, a linear or branched alkynyl group having 1 to 20 carbons, a cycloalkyl group having 3 to 10 carbons, a linear or branched alkoxy group having 1 to 20 carbons, a halogen, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group

For example, the organic reducing agent may include formic acid, oxalic acid, tartaric acid, citric acid, gluconic acid, glutaric acid, hydroxyglutaric acid, ascorbic acid, succinic acid, maleic acid, fumaric acid, acetic acid, aminoacetic acid, propionic acid, aminopropionic acid, 3-aminopropionic acid, butanoic acid, aminobutanoic acid, carbamic acid, 2,3,4-trihydroxyglutaric acid, citric acid, isocitric acid, transaconitic acid, cisaconitic acid, homocitric acid, carbonic acid, ethanol, propanol and isomers thereof, butanol and isomers thereof, pentanol and isomers thereof, hexanol and isomers thereof, hydrazine and derivatives thereof, urea and derivatives and precursors thereof, carbamethanol, glycol, glycerol, glucose, ribose, trihydroxybenzene, borane, dimethylamineborane, lactic acid, malonic acid, hydroxylamine, trihydroxybenzene, polycarboxylic acid, amino acid and derivatives thereof, a polyacrylic acid, alanine, glycine, hydroquinone and derivatives thereof, hydroquinone sulfonic acid, hydroxylamine, bases thereof, and mixtures thereof, but is not limited thereto.

In an example embodiment, the inorganic reducing agent may include a member selected from the group consisting of an inorganic acid, a metal halide, a metal thiosulfate salt, a metal sulfite salt, a metal bisulfate salt, ferrite, a metal sulfite salt, a metal hydride, metal borohydride, a metal ammonium salt, a metal persulfate, a metal periodate, hypophosphorous acid, hypophosphorous acid ammonium, a metal hypophosphorous acid salt, a metal ethylenediaminetetraacetic acid salt, and combinations thereof, but is not limited thereto.

For example, the inorganic reducing agent may include a member selected from the group consisting of a sodium salt or potassium salt of ethylenediaminetetraacetic acid, sodium aldehyde sulfoxynate, potassium aldehyde sulfoxynate, sodium formaldehyde sulfoxynate, potassium formaldehyde sulfoxynate, sodium pyrophosphate, potassium pyrophosphate, sodium phosphate, potassium phosphate, sodium metabisulfite, ferrous sulfate, sodium bisulfite, potassium bisulfite, a sulfite salt of an alkali metal or alkali earth metal, a bisulfite salt of an alkali metal or alkali earth metal, a halide of an alkali metal or alkali earth metal, a thiosulfate salt of an alkali metal or alkali earth metal, a hydride of an alkali metal or alkali earth metal, a borohydride of an alkali metal or alkali earth metal, an ammonium salt of an alkali metal or alkali earth metal, a persulfate of an alkali metal or alkali earth metal, a periodate of an alkali metal or alkali earth metal, a hypophosphorous acid salt of an alkali metal or alkali earth metal, and combinations thereof, but is not limited thereto.

In an example embodiment, aging the reaction mixture prior to hydrothermally reacting the same may be further included, but the present disclosure is not limited thereto. The aging process may be carried out, for example, at a room temperature or higher temperature for a proper time, and the reaction mixture may be formed to be in a gel state by the aging process. For example, the aging process may be carried out at a room temperature to temperature of 100°C or lower, but the present disclosure is not limited thereto.

In an example embodiment, the method for producing a copper silicate molecular sieve may include: preparing a first solution containing the silica source, the base, the alkali metal source and water; preparing a second solution containing a Cu²⁺-containing compound as the copper source, and water; and hydrothermally reacting a reaction mixture obtained by mixing the first and second solutions with each other to form a copper silicate molecular sieve, but the present disclosure is not limited thereto. In the example embodiment, the first solution may further include a reducing agent, but is not limited thereto. In the example embodiment, the method for producing a copper silicate molecular sieve may further include aging the reaction mixture prior to hydrothermally reacting the reaction mixture, but is not limited thereto. In the example embodiment, a molar ratio of SiO₂ derived from the silica source: CuO derived from the copper source: the reducing agent: the base: the alkali metal source: water (H₂O) in the reaction mixture is 1 to 10: 1 to 10: 1 to 20: 1 to 20: 1: 20: 30 to 700, but is not limited thereto.

The copper silicate molecular sieve in accordance with example embodiments, which is produced as described above, may be represented by a (A)₂₋₄Cu_{0.6∼2}Si_{3∼10}O_{9∼26}·xH₂O general formula wherein A=K⁺, Na⁺, Cs⁺, Ca²⁺, Mg²⁺ or Ba²⁺, and x=1 to 3, but is not limited thereto.

In an example embodiment, the copper silicate molecular sieve may be produced as set forth hereinafter. A gel containing Na₂SiO₃, CuSO₄, NaOH, KCl, NaCl and DDW (deionized distilled water) is prepared, wherein a molar ratio of SiO₂: CuSO₄: Na₂O: KCl: NaCl; H₂O in the gel may be 1.50 to 4.21: 1.00 to 2.42: 2.67 to 5.42: 4.46 to 8.51: 3.30 to 9.25: 200 to 700. The gel may be prepared as set forth hereinafter. A Si source solution is prepared by continuously adding a NaOH solution (0.2 to 4 g NaOH and 20 to 35 g DDW), a KCl solution (5 to 10 g KCl and 20 to 35 g DDW), and a NaCl solution (5 to 15 g NaCl and 20 to 30 g DDW) into 5 to 20 g Na₂SiO₃ while stirring them. A Cu source solution is prepared by dissolving CuSO₄ or copper acetate (1 to 6 g) in DDW (20 to 60 g). The two solutions are mixed with each other and aged at a room temperature for about 14 hours. If necessary, 0.1 to 0.5 g of a seed crystal of an ideal AM-6 molecular sieve is added after the aging. The gel is injected into a 50-ml Teflon-lined autoclave, and the autoclave is heated under a stable condition at 200°C to 250°C for 1 to 5 days. The autoclave is removed from the oven, and cooled under flowing water at a room temperature. The reaction mixture is delivered to a plastic cone-shaped tube, and solid particles are collected by centrifugation, washed with a sufficient amount of DDW, and dried at 100°C for about 1 hour so that 3 g to 4 g of a purple sample can be obtained.

In another example embodiment, the copper silicate molecular sieve may be produced as set forth hereinafter. A gel containing Na₂SiO₃, CuSO₄, NaOH, KCl, NaCl, glucose, and DDW (deionized distilled water) is prepared, wherein a molar ratio of SiO₂: CuSO₄: Na₂O: KCl: NaCl: glucose: H₂O in the gel may be 1.50 to 4.21: 1.00 to 2.42: 2.67 to 5.42: 4.46 to 8.51: 3.30 to 9.25: 0.10 to 0.50: 200 to 700. The gel may be prepared as set forth hereinafter. A Si source solution is prepared by continuously adding a NaOH solution (0.2 to 4 g NaOH and 20 to 35 g DDW), a KCl solution (5 to 10 g KCl and 20 to 35 g DDW), a NaCl solution (5 to 15 g NaCl and 20 to 30 g DDW) and a glucose solution (0.2 to 4 g glucose and 5 to 20 g DDW) to 5 to 20 g Na₂SiO₃ while stirring them. A Cu source solution is prepared by dissolving CuSO₄ or copper acetate (1 to 6 g) in DDW (20 to 60 g). The two solutions are mixed with each other and aged at a room temperature for about 14 hours. The gel is delivered to a 50-ml Teflon-lined autoclave, and the autoclave is heated under a stable condition at 200°C to 250°C for 1 to 5 days. Thereafter, the autoclave is removed from the oven, and cooled under flowing water at a room temperature. The obtained reaction mixture is delivered to a plastic cone-shaped tube, and solid particles are collected by centrifugation, washed with a sufficient amount of DDW, and dried at 100°C for about 1 hour so that the copper silicate molecular sieve can be obtained.

In an example embodiment, the silica source includes a silicate salt, a silicon oxide, or a silicon compound represented by the following Chemical Formula 4:

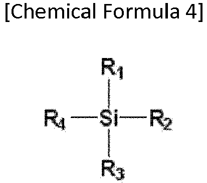

In the chemical formula above, each of R₁ to R₄ independently represents hydrogen, hydroxyl group, a carboxyl group, a halogen group element, an alkyl or alkoxy group of C₁ to C₂₂, or an aralkyl or aryl group, and may include, but is not limited to, at least one oxygen, nitrogen, sulfur or metal atom. For example, the alkyl group or the alkyl group included in the alkoxy group may include a linear or branched alkyl group of C₁ to C₂₂, but is not limited thereto.

In an example embodiment, the silica source may include a member selected from the group consisting of a silicate salt of an alkali metal or alkali earth metal, colloid silica, silica hydrogel, silicic acid, fumed silica, tetraalkylorthosilicate, silicon hydroxide and combinations thereof, but is not limited thereto.

In an example embodiment, the copper source may include a copper oxide or salt, but is not limited thereto. For example, the copper source may include a member selected from the group consisting of CuO, CuSO₄, a copper halide salt and combinations thereof, but is not limited thereto.

In an example embodiment, the base may include a compound containing an alkali metal or alkali earth metal, but is not limited thereto. The alkali metal or alkali earth metal is selected from the metal elements included in the alkali metal group and alkali earth metal group of the Element Periodic Table. For example, the base may include a hydroxide of an alkali metal or alkali earth metal, but is not limited thereto.

In an example embodiment, the alkali metal source may contain a salt of an alkali metal, but is not limited thereto. For example, the salt of an alkali metal may be selected from the group consisting of a halide, an ammonium salt, a carbonate, a sulphate, a nitrate, a phosphate of an alkali metal, and combinations thereof, but is not limited thereto.

The copper silicate molecular sieve includes a framework where SiO₄ tetrahedron and CuO₆ octahedron are connected to each other, and when the copper silicate molecular sieve is produced according to the novel producing method of the example embodiments, the copper silicate molecular sieve can be synthesized with a high yield, and obtained as a copper silicate molecular sieve having improved crystallinility, and thereby, improving physicochemical properties.

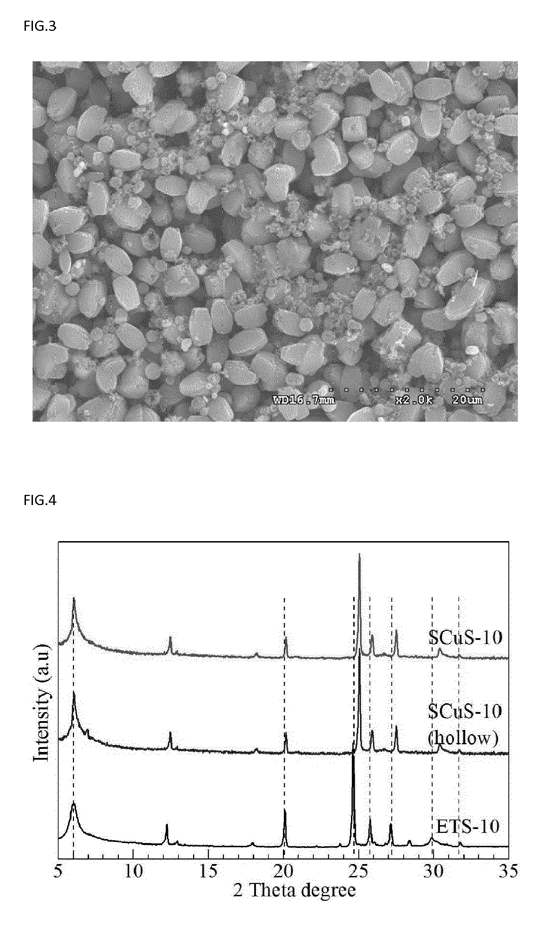

In an example embodiment, the copper silicate molecular sieve produced according to the producing method of the example embodiments has a powder X-ray diffraction pattern indicating a conventionally known ETS-10 crystal structure (refer to **FIG. 4**)**.**

Another aspect of the example embodiments provides a novel copper silicate molecular sieve having ETS-10 crystal structure.

In an example embodiment, the copper silicate molecular sieve is produced by the above-described producing method of the example embodiments, and has ETS-10 crystal structure including a framework where SiO₄ tetrahedron and CuO₆ octahedron are connected to each other.

In an example embodiment, the copper silicate molecular sieve may be represented by the (A)₂₋₄Cu_{0.6-2}Si₃₋₁₀O₉₋₂₆·xH₂O general formula wherein A=K⁺, Na⁺, Cs⁺, Ca²⁺, Mg²⁺ or Ba²⁺, and x=1 to 3, but is not limited thereto.

Another aspect of the example embodiments provides a crystal of the novel copper silicate molecular sieve having the ETS-10 crystal structure.

In an example embodiment, the copper silicate molecular sieve is produced by the above-described producing method of the example embodiments, and has ETS-10 crystal structure including a framework where SiO₄ tetrahedron and CuO₆ octahedron are connected to each other.

In an example embodiment, the copper silicate molecular sieve may be represented by the (A)₂₋₄Cu_{0.6-2}Si₃₋₁₀O₉₋₂₆·xH₂O general formula wherein A=K⁺, Na⁺, Cs⁺, Ca²⁺, Mg²⁺ or Ba²⁺, and x=1 to 3, but is not limited thereto.

In an example embodiment, the crystal of the copper silicate molecular sieve may have hollows, but is not limited thereto. For example, the crystal of the copper silicate molecular sieve may have a crystal form having hollows when a seed crystal is used during the process for producing the copper silicate molecular sieve.

The copper silicate molecular sieve and the crystal thereof in accordance with the example embodiments may be effectively used in the field of catalysts, nano-materials and others.

Hereinafter, the present disclosure will be described more in detail by using Examples, but the present disclosure is not limited to the Examples.

### [Examples]

### <Reagents>

The following materials were used without additional purification after purchase of the materials:
Sodium silicate solution (Na₂SiO₃, ∼14% NaOH, ∼27% SiO₂, Sigma-Aldrich);
Sodium hydroxide (NaOH, 93-100%, Samchun);
Sodium chloride (NaCl, 99.5%, Samchun);
Potassium chloride (KCl, 99%, Oriental);
Copper (II) sulfate·pentahydrate (CuSO₄·5H₂O, 99%, Sigma-Aldrich);
Cupper acetate (Cu, 99%);
Glucose (D(+)-Glucose, ACS reagent, Sigma-Aldrich)

### <Example 1> Synthesis of Copper Silicate SCuS-10 (hollow)

A gel including Na₂SiO₃, CuSO₄, NaOH, KCl, NaCl and DDW (deionized distillated water) was prepared, wherein a molar ratio of SiO₂: CuSO₄: Na₂O:KCl: NaCl: H₂O in the gel was 2.8: 1: 2.2: 7.4: 5: 400. The gel was prepared as set forth hereinafter. Preparation of a Si source solution: a NaOH solution (0.2 to 4 g of NaOH and 20 to 35 g of DDW), a KCl solution (5 to 10 g of KCl and 20 to 35 g of DDW) and a NaCl solution (5 to 15 g of NaCl and 20 to 30 g of DDW) were continuously added to 5 to 20 g of Na₂SiO₃ while being stirred. A Cu source solution was prepared by dissolving CuSO₄ or copper acetate (1 to 6 g) in DDW (20 to 60 g). The two solutions were mixed with each other and aged at a room temperature for 14 hours. After the aging, 0.1 to 0.5 g of a seed crystal of an ideal AM-6 molecular sieve was added. The gel was delivered to a 50-ml Teflon-lined autoclave, and the autoclave was heated under a stable condition at 200°C to 250°C for 1 to 5 days. Thereafter, the autoclave was removed from the oven, and cooled in flowing water at a room temperature. The reaction mixture was delivered to a plastic cone-shaped tube, and solid particles were collected by centrifugation, washed with a sufficient amount of DDW, and dried at 100°C for 1 hour. A purple copper silicate SCuS-10 (hollow) sample of 3 to 4 g was obtained. The copper silicate SCuS-10 (hollow) sample may be represented by the general formula (NaKCu)₄CuSi₅O₁₃·xH₂O.

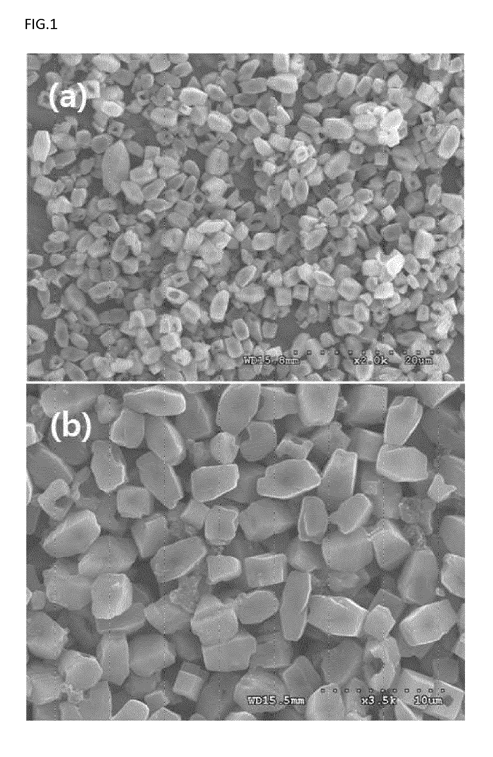

FIG. 1 shows SEM images measured for a SCuS-10 (hollow) crystal, which is a copper silicate molecular sieve having hollows and synthesized by using CuSO₄·5H₂O as a copper source. The crystal has a truncated square bipyramidal structure, which is highly similar to the conventional ETS-crystal structure, and a size of the crystal is about 3 to 5 *µ*m : **FIG. 1(a)** is a 2K magnified image, and **FIG. 1(b)** is a 3.5 K magnified image.

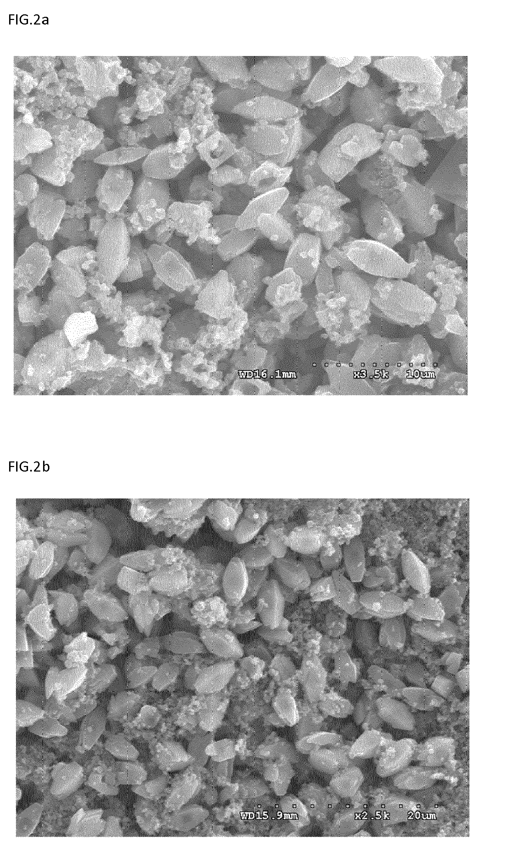

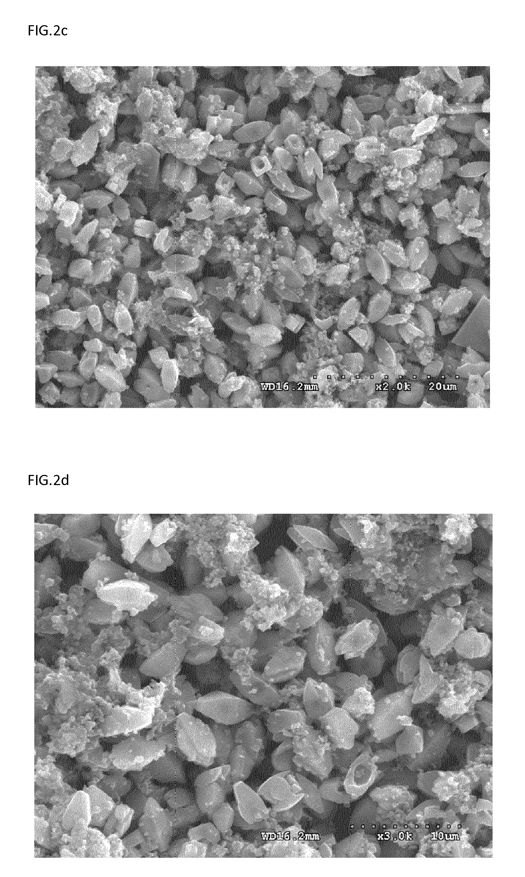

**FIG. 2** shows SEM images measured for a copper silicate molecular sieve SCuS-10 (hollow) crystal synthesized by using copper acetate as a copper source in accordance with the present Example. The crystal has a truncated square bipyramidal structure, which is highly similar to the conventional ETS-crystal structure and the SCuS-10 produced by using CuSO₄·5H₂O, and a size of the crystal is about 3 to 6 *µ*m along a c-axis.

### <Example 2> Synthesis of Copper Silicate SCuS-10

A gel including Na₂SiO₃, CuSO₄, NaOH, KCl, NaCl, glucose, and DDW (deionized distillated water) was prepared, wherein a molar ratio of SiO₂: CuSO₄: Na₂O: KCl: NaCl: glucose: H₂O in the gel was 2.4: 1: 2: 7.4: 5.3: 0.2: 400. The gel was prepared as set forth hereinafter. Preparation of a Si source solution: a NaOH solution (0.2 to 4 g of NaOH and 20 to 35 g of DDW), a KCl solution (5 to 10 g of KCl and 20 to 35 g of DDW), a NaCl solution (5 to 15 g of NaCl and 20 to 30 g of DDW) and a glucose solution (0.2 to 4 g of glucose and 5 to 20 g of DDW) were continuously added to 5 to 20 g of Na₂SiO₃ while being stirred. A Cu source solution was prepared by dissolving CuSO₄ or copper acetate (1 to 6 g) in DDW (20 to 60 g). The two solutions were mixed with each other and aged at a room temperature for 14 hours. The gel was delivered to a 50-ml Teflon-lined autoclave, and the autoclave was heated under a stable condition at 200°C to 250°C for 1 to 5 days. Thereafter, the autoclave was removed from the oven, and cooled in flowing water at a room temperature. The reaction mixture was delivered to a plastic cone-shaped tube, and solid particles were collected by centrifugation, washed with a sufficient amount of DDW, and dried at 100°C for 1 hour. A copper silicate SCuS-10 sample of 3 to 5 g was obtained. The copper silicate SCuS-10 may be represented by the general formula (NaKCu)₄CuSi₅O₁₃·xH₂O.

**FIG. 3** shows an SEM image measured for a novel copper silicate molecular sieve SCuS-10 crystal synthesized by using CuSO₄·5H₂O as a copper source under the presence of glucose as a reducing agent. If the copper silicate molecular sieve is produced by using the glucose, the seed crystal of the AM-6 molecular sieve is unnecessary. The sample has no hollow unlike the sample produced without using glucose. The crystal has a truncated square bipyramidal structure, and the crystal has a shape which is highly similar to the conventional ETS-crystal structure, and a size of the crystal is about 5 to 7 *µ*m, which is relatively larger than the sample produced without glucose.

**FIG. 4** shows powder X-ray diffraction patterns of the ETS-10, SCuS-10 (hollow) and SCuS-10 samples. The powder X-ray diffraction patterns confirm that the copper silicate molecular sieve produced in accordance with the present Example has the ETS-10 crystal structure.

### <Comparative Example 1>

### Synthesis of Copper Silicate CuSH-1

As a comparative example, the conventionally known copper silicate CuSH-1 (Copper Silicate Houston-1) can be produced by a conventional method.

Specifically, CuSH-1 was produced as described below.

A gel including Na₂SiO₃, CuSO₄, NaOH, KCl, NaCl, H₂O₂ and DDW (deionized distillated water) was prepared, wherein a molar ratio of SiO₂: CuSO₄: Na₂O: KCl: NaCl: H₂O₂: H₂O in the gel was 3.00: 1.00: 2.20: 8.00: 5.30: 0.35: 400. The gel was prepared as set forth hereinafter. Preparation of a Si source solution: a NaOH solution (3.2 g of NaOH and 25 g of DDW), a KCl solution (9 g of KCl and 25 g of DDW), a NaCl solution (5 g of NaCl and 25 g of DDW) and 2 ml of H₂O₂ were continuously added to 12 g of Na₂SiO₃ while being stirred. A Cu source solution was prepared by dissolving CuSO₄ (5 g) in DDW (40 g). The two solutions were mixed with each other and aged at a room temperature for 14 hours. The gel was delivered to a 50-ml Teflon-lined autoclave, and the autoclave was heated under a stable condition at 230°C for 2 days. Thereafter, the autoclave was removed from the oven, and cooled in flowing water at a room temperature. The reaction mixture was delivered to a plastic cone-shaped tube, and solid particles were collected by centrifugation, washed with a huge amount of DDW, and dried at 100°C for 1 hour. A sky-blue sample of 4 to 6 g was obtained.

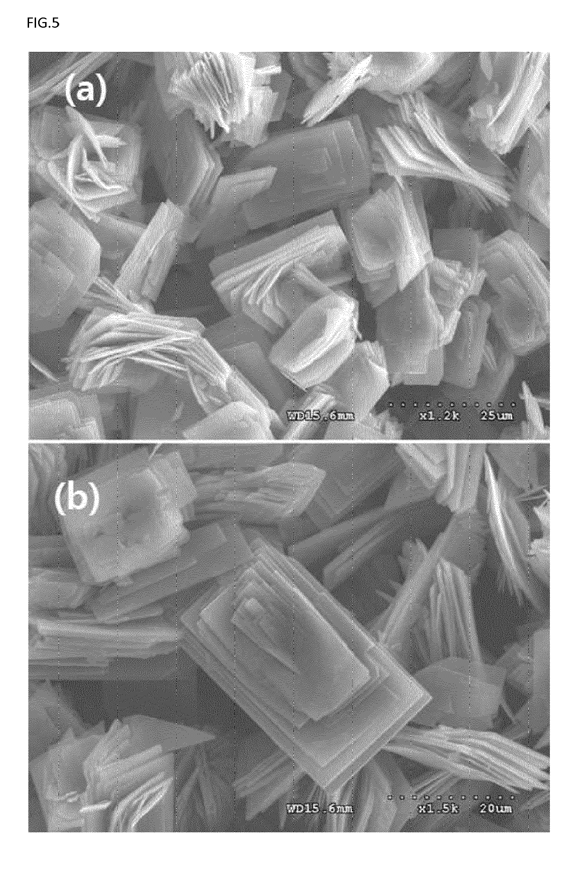

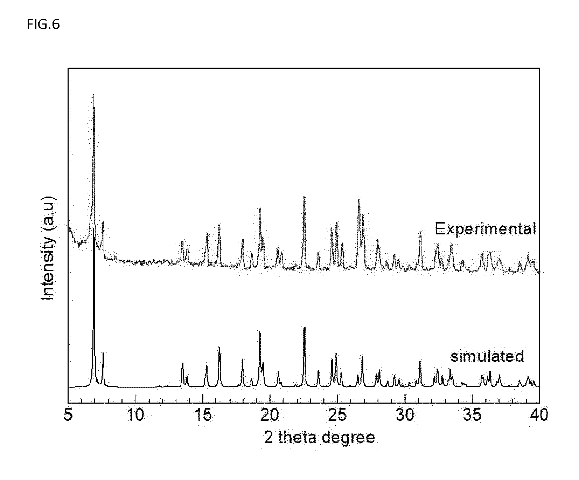

**FIG. 5** shows SEM images of the CuSH-1 crystal (comparative example) synthesized by using CuSO₄·5H₂O as a copper source. **FIG. 6** shows a powder X-ray diffraction spectrum of the CuSH-1 crystal (comparative example) synthesized by using CuSO₄·5H₂O as a copper source.

The present disclosure has been described in detail with reference to Examples. However, the present disclosure is not limited to the above-described example embodiments and Examples and can be modified in various forms, and it is apparent that the present disclosure can be modified by those skilled in the art in various forms within the technical idea of the present disclosure.

## Claims

1. A method for producing a copper silicate molecular sieve, comprising : hydrothermally reacting a reaction mixture containing a silica source, a copper source, an alkali metal source, a base and water to form a copper silicate molecular sieve, wherein the reaction mixture includes no oxidizing agent.

2. The method for producing a copper silicate molecular sieve of claim 1, wherein pH of the reaction mixture is from 8 to 12.

3. The method for producing a copper silicate molecular sieve of claim 1, wherein a temperature of the hydrothermal reaction is from 100°C to 300°C.

4. The method for producing a copper silicate molecular sieve of claim 1, wherein the reaction mixture further comprises a seed crystal.

5. The method for producing a copper silicate molecular sieve of claim 1, further comprising aging the reaction mixture prior to hydrothermally reacting the reaction mixture.

6. The method for producing a copper silicate molecular sieve of claim 1, wherein the copper silicate molecular sieve has ETS-10 structure.

7. The method for producing a copper silicate molecular sieve of claim 1, wherein a crystal of the copper silicate molecular sieve has hollows.

8. The method for producing a copper silicate molecular sieve of claim 1, wherein the reaction mixture further comprises a reducing agent.

9. The method for producing a copper silicate molecular sieve of claim 8,
wherein the reducing agent comprises an organic reducing agent, an inorganic reducing agent or combinations thereof.

10. The method for producing a copper silicate molecular sieve of claim 9,
wherein the inorganic reducing agent comprises one or more organic reducing agents having a functional group selected from the group consisting of a carboxyl group, hydroxyl group, an aldehyde group, an amine group, sulfite group, bisulfite group, a carbonate group, a bicarbonate group, an phosphorous acid group, a hypophosphorous acid group, thiol group, cyano group, thiocyano group, a sulfide group, a bisulfide group, an ammonium group, a hydrazinyl group, a borohydride group, an amide group, a silane group, an amino group, a carbamoyl group, an urea group and combinations thereof.

11. The method for producing a copper silicate molecular sieve of claim 9,
wherein the organic reducing agent may include a member selected from the group consisting of a carboxylic acid having 1 to 20 carbons and derivatives thereof, a dicarboxylic acid having 1 to 20 carbons and derivatives thereof, a polycarboxylic acid having 1 to 20 carbons and derivatives thereof, an amino acid having 1 to 20 carbons and derivatives thereof, a monovalent or multivalent alcohol having 1 to 20 carbons, an aldehyde-based compound having 1 to 20 carbons and derivatives thereof, a carbamoylic acid having 1 to 20 carbons and derivatives thereof, an amino acid and derivatives thereof, a boronic acid, a borane-based compound, a hydrazine-based compound, a silane-based compound, a hydroxylactone-based compound, a hydroquinone-based compound, an organic acid ammonium salt, a carbonate-based compound, an amide-based compound, an amine-based compound, a hydroxylamine-based compound, ammonia and ammonia precursor materials, urea and urea precursor materials, an urea hydrolysis product, and combinations thereof.

12. The method for producing a copper silicate molecular sieve of claim 9,
wherein the organic reducing agent comprises a member represented by the following Chemical Formula 1 or 2:
[Chemical Formula 1] R-COH
[Chemical Formula 2] R'-COOH
in each of Chemical Formulas 1 and 2 above, each of R and R' is independently hydrogen, or a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl group or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group, which may have at least one substituent selected from Group A below:
[Group A]
a substituent group consisting of a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group.

13. The method for producing a copper silicate molecular sieve of claim 9,
wherein the organic reducing agent comprises a member represented by the following Chemical Formula 3:
[Chemical Formula 3] R"-OH
in the chemical formula above, R" is a linear or branched alkyl group having 1 to 20 carbons, a linear or branched alkenyl group having 1 to 20 carbons, a linear or branched alkynyl group having 1 to 20 carbons, a cycloalkyl group having 3 to 20 carbons, a cycloalkenyl group having 3 to 20 carbons, a cycloalkynyl group having 3 to 20 carbons, a linear or branched alkoxy group having 1 to 20 carbons, an amine group, an aryl or aralkyl group having 6 to 20 carbons, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group, which may have at least one substituent selected from Group B below:
[Group B]
a substituent group consisting of a linear or branched alkyl group having 1 to 20 carbons, a linear or branched alkenyl group having 1 to 20 carbons, a cycloalkenyl group having 3 to 20 carbons, a cycloalkynyl group having 3 to 20 carbons, a linear or branched alkynyl group having 1 to 20 carbons, a cycloalkyl group having 3 to 10 carbons, a linear or branched alkoxy group having 1 to 20 carbons, a halogen, a carboxylic group, hydroxyl group, an aldehyde group, an amine group, sulfite group, bisulfite group, a carbonate group, a bicarbonate group, a phosphorous acid group, a hypophosphorous acid group, thiol group, cyano group, thiocyano group, an ammonium group, a hydrazinyl group, a borohydride group, an amide group, a silane group, an amino group, a carbamoyl group, or an urea group.

14. The method for producing a copper silicate molecular sieve of claim 9,
wherein the organic reducing agent comprises a carbohydrate compound.

15. The method for producing a copper silicate molecular sieve of claim 9,
wherein the inorganic reducing agent may include a member selected from the group consisting of an inorganic acid, a metal halide, a metal thiosulfate salt, a metal sulfite salt, a metal bisulfate salt, ferrite, a metal sulfite salt, a metal hydride, a metal borohydride, a metal ammonium salt, a metal persulfate, a metal periodate, hypophosphorous acid, hypophosphorous acid ammonium, a metal hypophosphorous acid salt, a metal ethylenediaminetetraacetic acid salt, and combinations thereof.

16. The method for producing a copper silicate molecular sieve of claim 1, comprising:
preparing a first solution containing the silica source, the base, the alkali metal source and water;
preparing a second solution containing a Cu²⁺-containing compound as the copper source, and water; and
hydrothermally reacting a reaction mixture obtained by mixing the first and second solutions with each other to form a copper silicate molecular sieve.

17. The method for producing a copper silicate molecular sieve of claim 16,
wherein the first solution further comprises a reducing agent.

18. The method for producing a copper silicate molecular sieve of claim 16,
further comprising aging the reaction mixture prior to hydrothermally reacting the reaction mixture.

19. The method for producing a copper silicate molecular sieve of claim 1,
Wherein in the reaction mixture, a molar ratio of SiO₂ derived from the silica source: CuO derived from the copper source: the base: the alkali metal source: water (H₂O) is 1 to 10: 1 to 10: 1 to 20: 1 to 20: 30 to 700.

20. The method for producing a copper silicate molecular sieve of claim 8,
wherein in the reaction mixture, a molar ratio of SiO₂ derived from the silica source: CuO derived from the copper source: the reducing agent: the base: the alkali metal source: water (H₂O) is 1 to 10: 1 to 10: 1 to 20: 1 to 20: 1:20: 30 to 700.

21. The method for producing a copper silicate molecular sieve of claim 1,
wherein the silica source comprises a silicate salt, a silicon oxide, or a silicon compound represented by the following Chemical Formula 4: 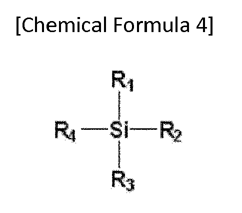 in the chemical formula above, each of R₁ to R₄ independently represents hydrogen, hydroxyl group, a carboxyl group, a halogen group element, an alkyl or alkoxy group of C₁ to C₂₂, or an aralkyl or aryl group, and comprises at least one oxygen, nitrogen, sulfur or a metal atom.

22. The method for producing a copper silicate molecular sieve of claim 1,
wherein the silica source comprises a member selected from the group consisting of a silicate salt of an alkali metal or alkali earth metal, colloid silica, silica hydrogel, silicic acid, fumed silica, tetraalkylorthosilicate, silicon hydroxide and combinations thereof.

23. The method for producing a copper silicate molecular sieve of claim 1,
wherein the copper source comprises a copper oxide or salt.

24. The method for producing a copper silicate molecular sieve of claim 1,
wherein the base comprises a compound containing an alkali metal or alkali earth metal.

25. The method for producing a copper silicate molecular sieve of claim 1,
wherein the alkali metal source comprises a salt of an alkali metal.

26. A copper silicate molecular sieve, having ETS-10 crystal structure.

27. The copper silicate molecular sieve of claim 26,
wherein the copper silicate molecular sieve is produced by the method of any one of claims 1 to 25.

28. A crystal of a copper silicate molecular sieve, having ETS-10 crystal structure.

29. The crystal of a copper silicate molecular sieve of claim 28,
wherein the crystal has hollows.
